# EUROPEAN PATENT SPECIFICATION

(11) **EP 0 478 156 B1**
(45) Date of publication and mention of the grant of the patent: **16.02.1994**
(21) Application number: 91308020.6
(22) Date of filing: 02.09.1991
(51) Int. Cl.: B60J 7/00

(54) **Blind for vehicle opening roof**
Sonnenschutzblende für Fahrzeugsonnendach
Ecran pour toit ouvrant de véhicule

(30) Priority: 08.09.1990 GB 9019696
(43) Date of publication of application: 01.04.1992
(73) Proprietor: Britax Weathershields Limited, Birmingham B5 7EH (GB)
(72) Inventor: Scott, Paul Geoffrey, Solihull, West Midlands B90 1NR (GB)
(74) Representative: Hollinghurst, Antony

(56) References cited:
- EP-A- 0 164 532
- EP-A- 0 237 759

## Description

This invention relates to a roller blind for an opening roof for a vehicle in which the roof opening is closed by a transparent or translucent panel, the roller blind being mounted on the vehicle roof so as to extend across the opening and having a catch secured to its leading edge. A roller blind of this type is disclosed in EP-A-0164532.

According to the invention, the catch of a roller blind of the type described above comprises a base member secured to the leading edge of the blind and a lever pivotally mounted on the base member, the lever having a hook formation projecting beyond the leading edge of the blind and a handle projecting in the opposite direction to the hook formation, the pivotal connection between the lever and the base member being arranged to limit angular movement of the handle towards the adjacent portion of the blind to a predetermined minimum value.

An embodiment of the invention will now be described, by way of example, with reference to the accompanying drawings, in which:
Figure 1 is a perspective view of the top of a motor car having an opening roof in accordance with the invention;
Figure 2 is a plan view from below (i.e., from within the vehicle), of an opening roof in accordance with the invention, with the closure means removed;
Figure 3 is a plan view of one of the roller blind assemblies shown in Figure 2, with the lever of the catch shown detached from its base member;
Figure 4 is a side view of the lever of the catch shown in Figure 3;
Figure 5 is a cross-section of the base member of the catch shown in Figure 3, taken its the centre line;
Figure 6 is a side view showing the components of Figures 4 and 5 assembled together and fitted to the blind shown in Figure 3;
Figure 7 is a cross-sectional view showing the catch of Figures 4 to 6 in the position it occupies when the associated blind is fully retracted;
Figure 8 is a side view of an alternative lever for use in place of the lever shown in Figure 4;
Figure 9 is a side view showing the components of Figures 5 and 8 assembled together and fitted to the blind shown in Figure 3; and
Figure 10 is a cross-sectional view showing the catch of Figure 9 in the position it occupies when the associated blind is fully retracted.

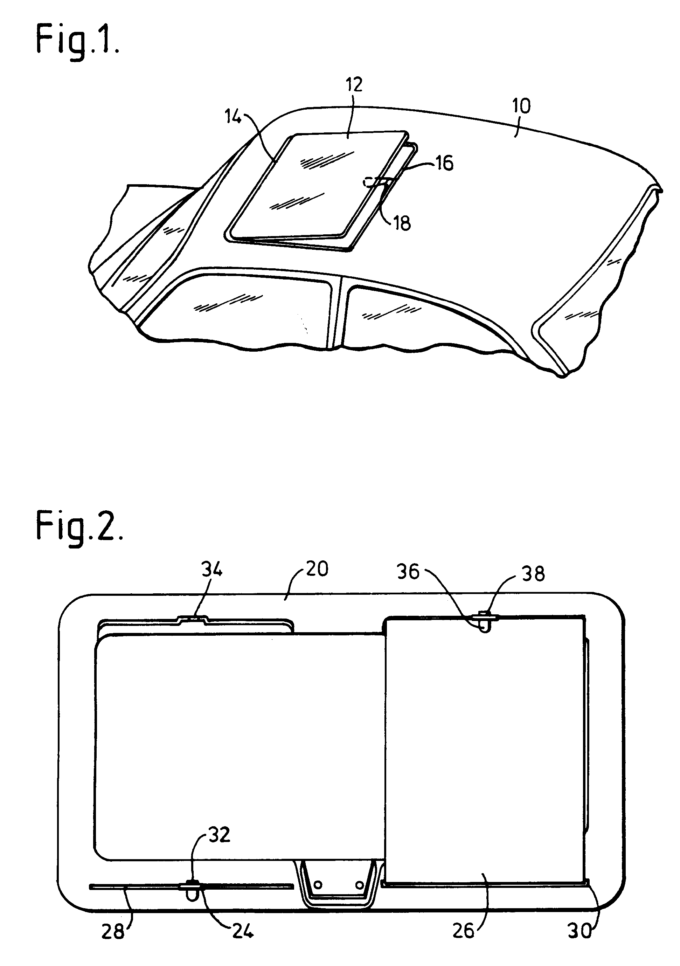

Referring to Figure 1, a roof 10 of a motor vehicle has an opening which is filled by a glass panel 12 which is hinged along its leading edge 14 to a frame 16 which bounds the opening. An opening mechanism 18 at the rear of the panel 12 is arranged to hold the panel 12 in a fully opened position, as illustrated, or in a fully closed position in which the panel 12 is level with the vehicle roof 10.

Figure 2 shows a trim ring 20 which is secured to the underside of the frame 16 and which includes an integral shroud 22 for surrounding a handle (not shown) of the opening mechanism 18. Two flexible fabric blinds 24 and 26 are counted on rollers which are concealed behind the trim ring 20, the two blinds being protractable through respective slots 28 and 30. The blind 24 is shown in the fully retracted position in which a catch 32 prevents its free end from being withdrawn completely through the slot 28. On the opposite side of the opening, the trim ring 20 has a slot 34 in which the catch 32 can engage when the sunblind 24 is deployed. The sunblind 26 is shown in the deployed position with its catch 36 engaging in a slot 38 in the trim ring 20.

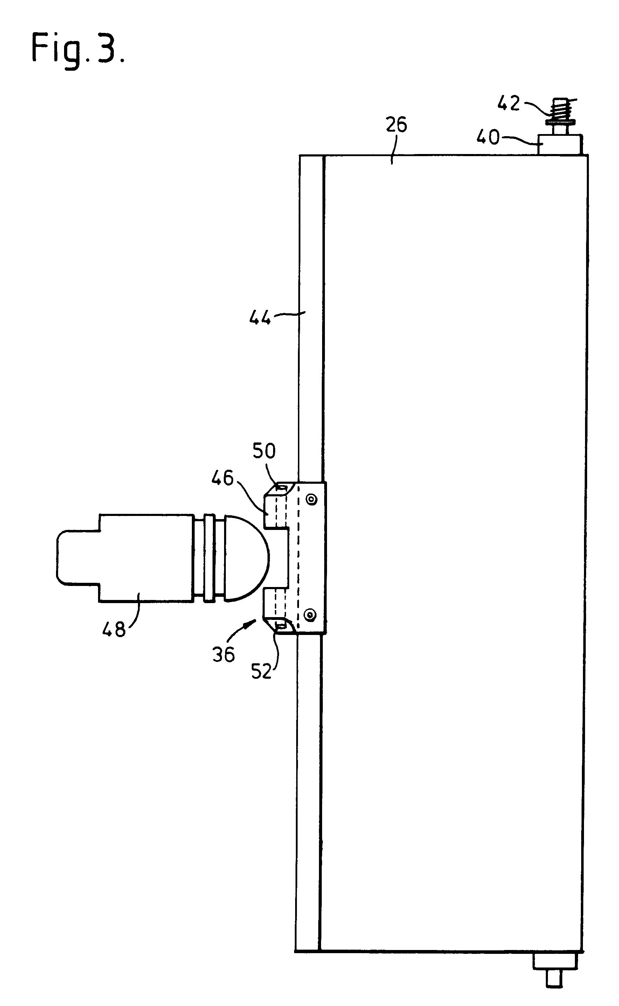

Figure 3 shows the sunblind 26 and its catch 36 in more detail. The sunblind 26 is mounted on a roller 40 having a retraction spring 42. On its leading edge, the sunblind 26 has a rigid strip 44. The catch 36 has a base member 46 secured to the strip 44 and a lever 48 which, in normal use, is secured to the base member 46 by a pivot pin, not shown, engaging in holes 50 and 52.

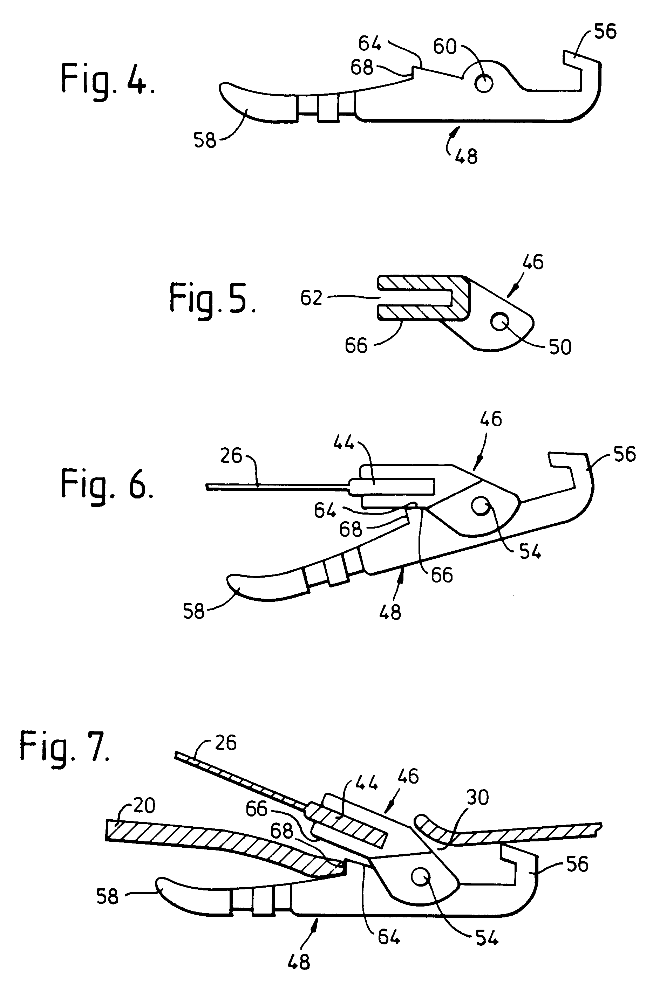

Referring to Figure 4, the lever 48 has a hook formation 56 at one end and a handle 58 at the other. The lever 48 also has a hole 60 for receiving the pivot pin 54. As can be seen from Figure 5, the base member 46 has a groove 62 for receiving the strip 44 on the leading edge of the blind 26. As can be seen from Figure 6, a flat 64 on the lever 48 engages with an abutment surface 66 on the base member 46 so as to limit angular movement of the handle 58 in the clockwise direction (as viewed in Figures 4-6) to about 14° to the blind 26. This ensures that, when the hook formation 56 engages in the slot 38 (Figure 2), the handle 58 is held clear of the surface of the blind 26 so that it can readily be grasped by a user.

When the hook formation 56 is released from the slot 38 and the blind 26 wound back onto the spindle 40, the strip 44 and part of the base member 46 are received into the slot 30 in the trim ring 20 (Figure 2) while the lever 48 lies across the slot 30. As shown in Figure 7, the base member 46 pivots to a position at a greater angle to the lever 48 than that illustrated in Figure 6, and an edge face 68 on the lever 48 (adjacent to the flat 64) engages with the rear edge of the slot 30 so as to hold the handle 58 clear of the adjacent surface of the trim ring 20 so that it is readily accessible when the blind is required to be deployed again.

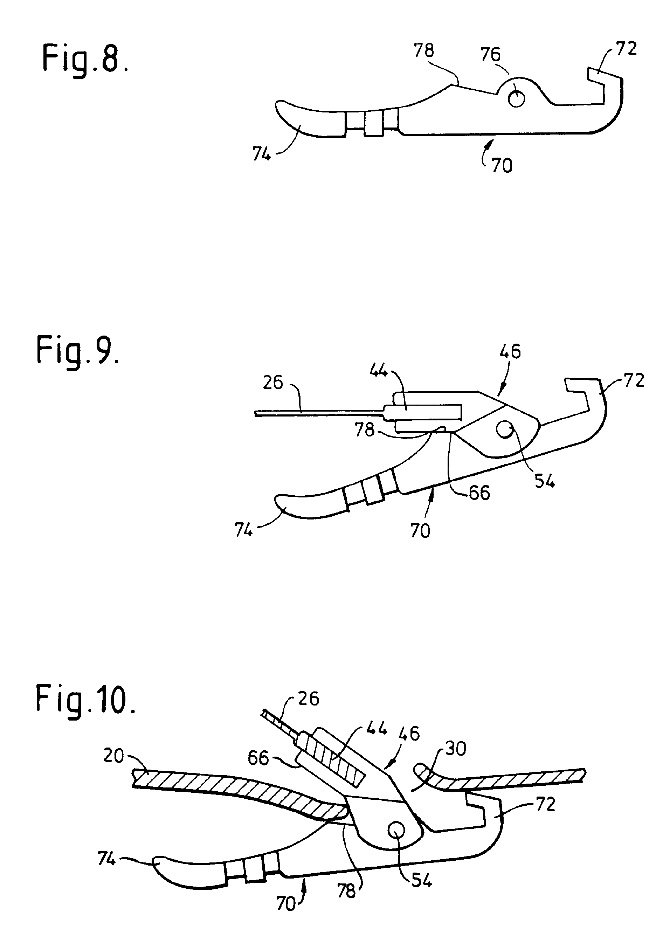

Figure 8 shows an alternative lever 70 which is similar to the lever 48 in that it has a hook formation 72 at one end, a handle 74 at the other, a hole 76 for receiving the pivot pin 54, and a flat 78 which, as can be seen from Figure 9, engages with an abutment surface 66 on the base member 46 so as to limit angular movement of the handle 58 in the clockwise direction (as viewed in Figures 8-10) to about 14° to the blind 26.

When the hook formation 72 is released from the slot 38 and the blind 26 wound back onto the spindle 40, the strip 44 and part of the base member 46 are received into the slot 30 in the trim ring 20 (Figure 2) while the lever 708 lies across the slot 30. However, the lever 70 does not have an edge face adjacent to the flat 78 (equivalent to the edge face 68 on the lever 48). Instead, the rear edge of the slot 30 engages between the flat 78 and the abutment surface 66 on the base member 46, as shown in Figure 10.

## Claims

1. A roller blind for an opening roof for a vehicle in which the roof opening is closed by a transparent or translucent panel (12), the roller blind (24, 26) being mounted on the vehicle roof so as to extend across the opening and having a catch secured to its leading edge, characterised in that the catch comprises a base member (46) secured to the leading edge of the blind (24, 26) and a lever (48, 70) pivotally mounted on the base member (46), the lever (48, 70) having a hook formation (56, 72) projecting beyond the leading edge of the blind (24, 26) and a handle (58, 74) projecting in the opposite direction to the hook formation (56, 72), the pivotal connection between the lever (48, 70) and the base member (46) being arranged to limit angular movement of the handle (58, 74) towards the adjacent portion of the blind (24, 26) to a predetermined minimum value.

2. A roller blind according to claim 1, wherein the lever (48, 70) has an abutment face arranged to engage with the base member (46) so as to limit angular movement of the handle (58, 74) towards the surface of the blind (24, 26) when the hook formation (56, 72) is engaged in a complementary formation on the vehicle to hold the blind (24, 26) in a deployed position.

3. A roller blind according to claim 1, wherein roller blind (24, 26) projects through a slot in a member (20) adjacent to an edge of the roof opening and the lever (48) has an edge face (68) arranged to engage with an rear edge of the slot so as to hold the handle (58) clear of the adjacent surface of said member (20) when the blind (24, 26) is fully retracted.

## Patentansprüche

1. Roll-Jalousie für ein Sonnendach für ein Fahrzeug, bei welchem die Dachöffnung durch eine lichtdurchlässige oder durchscheinende Platte (12) geschlossen ist, wobei die Roll-Jalousie (24, 26) so auf dem Fahrzeugdach angebracht ist, daß sie sich quer über die Öffnung erstreckt, und eine Arretierung aufweist, die mit ihrer Vorderkante befestigt ist, **dadurch gekennzeichnet,** daß die Arretierung ein mit der Vorderkante der Jalousie (24, 26) befestigtes Basis-Element (46) sowie einen in schwenkbarer Weise an dem Basis-Element (46) angebrachten Hebel (48, 70) aufweist, wobei der Hebel (48, 70) ein hakenförmiges Gebilde (56, 72), welches jenseits über die Vorderkante der Jalousie (24, 26) hinaus vorspringt, sowie eine Handhabe (58, 74) aufweist, welche in der zu dem hakenförmige Gebilde (56, 72) entgegengesetzten Richtung vorspringt, wobei die schwenkbare Verbindung zwischen dem Hebel (48, 70) und dem Basis-Element (46) zum Zwecke der Begrenzung der Winkelbewegung der Handhabe (58, 74) gegenüber dem angrenzenden Abschnitt der Jalousie (24, 26) auf einen vorgegebenen minimalen Betrag ausgebildet ist.

2. Roll-Jalousie nach Anspruch 1, bei welcher der Hebel (48, 70) eine Anschlagfläche aufweist, welche so angeordnet ist, daß sie mit dem Basis-Element (46) in Eingriff gelangt, so daß die Winkelbewegung der Handhabe (58, 74) in Richtung zu der Oberfläche der Jalousie (24, 26) begrenzt wird, falls das hakenförmige Gebilde (56, 72) sich in Eingriff mit einem komplementären Gebilde an dem Fahrzeug befindet, um die Jalousie (24, 26) in einem entfalteten Zustand zu halten.

3. Roll-Jalousie nach Anspruch 1, bei welcher die Roll-Jalousie (24, 26) durch einen Schlitz in einem Element (20) benachbart zu einer Kante der Dachöffnung hindurch vorspringt und der Hebel (48) eine Kantenfläche (68) aufweist, welche so angeordnet ist, daß sie mit einer rückwärtigen Kante des Schlitzes in Eingriff gelangt, so daß die Handhabe (58) von der angrenzenden Oberfläche des genannten Elementes (20) freigehalten wird, falls die Jalousie (24, 26) vollständig zurückgezogen ist.

## Revendications

1. Un écran ou store roulant pour un toit ouvrant de véhicule, dans lequel l'ouverture du pavillon est fermée par un panneau transparent ou translucide (12), le store roulant (24, 26) étant monté sur le pavillon du véhicule de manière à s'étendre transversalement à l'ouverture et comportant un loquet de verrouillage fixé sur son bord avant, caractérisé en ce que le loquet de verrouillage comprend une embase (46) fixée sur le bord avant du store (24, 26) et un pêne (48, 70) monté à rotation sur l'embase (46), le pêne (48, 70) comportant un bossage à crochet (56, 72) se prolongeant au delà du bord avant du store (24, 26) et une poignée (58, 74) s'étendant dans la direction opposée à celle du bossage à crochet (56, 72), l'assemblage pivotant entre le pêne (48, 70) et l'embase (46) étant agencé de manière à limiter le déplacement angulaire de la poignée (58, 74) vers la partie contiguë du store (24, 26) à une valeur minimale prédéterminée.

2. Un écran ou store roulant selon la revendication 1, dans lequel le pêne (48, 70) compporte une surface de butée agencée pour venir en prise sur l'embase (46), de manière à limiter le déplacement angulaire de la poignée (58, 74) vers la surface du store (24, 26) lorsque le bossage à crochet (56, 72) est engagé dans un bossage complémentaire du véhicule pour maintenir le store (24, 26) en position déployée.

3. Un écran ou store roulant selon la revendication 1, dans lequel le store roulant (24, 26) passe à travers une fente d'un élément (20) contigu à un bord de l'ouverture du pavillon et le pêne (48) comporte une face latérale (68) agencée pour venir en prise dans un bord arrière de la fente, de manière à maintenir la poignée (58) dégagée de la surface contiguë dudit élement (20) lorsque le store (24, 26) est totalement rétracté.
